# EUROPEAN PATENT SPECIFICATION

(11) **EP 3 364 159 B1**
(45) Date of publication and mention of the grant of the patent: **22.01.2020**
(21) Application number: 18020055.2
(22) Date of filing: 12.02.2018
(51) Int. Cl.: G01F 1/00

(54) **COMPUTER-IMPLEMENTED METHOD FOR UNITARY SYNTHESIS AND DESIGN OF FLOW METERS AND OF COMPOUND GAUGING STRUCTURES**
COMPUTERIMPLEMENTIERTES VERFAHREN ZUR EINHEITLICHEN SYNTHESE UND ZUM ENTWURF VON DURCHFLUSSMESSGERÄTEN UND VON VERBINDUNGMESSSTRUKTUREN
PROCÉDÉ INFORMATIQUE DE SYNTHÈSE UNITAIRE ET DE CONCEPTION DE DÉBITMÈTRES ET DE STRUCTURES DE JAUGEAGE DE COMPOSÉS

(30) Priority: 20.02.2017 RO 201700095
(43) Date of publication of application: 22.08.2018
(73) Proprietor: Motit, Horia Mihai, 021142 Bucuresti (RO)
(72) Inventor: Motit, Horia Mihai, 021142 Bucuresti (RO)
(74) Representative: Strenc, Alexandru Cristian

(56) References cited:
- Nidhin Manohar: "Flowmeter Selection and Sizing", www.slideshare.net, 2 November 2013 (2013-11-02), XP055534446, Retrieved from the Internet: URL:https://www.slideshare.net/nidhinmanoh ar4/flow-meter-selection-and-sizing [retrieved on 2018-12-14]
- MOTIT ET AL: "Sinteza si Clasificarea Unitara a Debitmetrelor", AUTOMATIZARI SI INSTRUMENTATIE, CONTROL AND INSTRUMENTATION ASSOCIATION OF ROMANIA, RO, no. 5-6, 28 September 2011 (2011-09-28), pages 9-12, XP009506925,
- Fcri: "FMSEL 2.0 - A SOFTWARE FOR FLOWMETER SELECTION AND SIZING", , 1 January 2014 (2014-01-01), XP055534766, Retrieved from the Internet: URL:http://www.fcriindia.com/wp-content/up loads/2014/04/fmsel-sw-development.pdf [retrieved on 2018-12-14]
- R.A. FURNESS: "BS 7405: The principles of flowmeter selection", FLOW MEASUREMENT AND INSTRUMENTATION., vol. 2, no. 4, 1 October 1991 (1991-10-01) , pages 233-242, XP055534772, GB ISSN: 0955-5986, DOI: 10.1016/0955-5986(91)90006-D

## Description

This invention relates to a computer implemented method for unitary synthesis and design of flowmeters and of the compound gauging structures, considered also as combinations of flowmeters, which can be used to design any type of flowmeter or of any compound gauging structures that can be logically imagined in the future to measure flow, based on any working principle known and applicable to any type of industrial environment.

Are known in practice methods of synthesizing and configuration of flowmeters and of the compound gauging structures, which are based on investigation of various areas of physics, and following a possible identification of the developments in physics, finalized by a new working principle or law, potentially usable for measuring one of the parameters which are involved in the analytical relationships of flow rate definition, and consequently in the flow measurement.

In the case of a successful investigation, these methods are based on the possible achievement of a new type of flowmeter, that uses said identified physical principle, and thus being only an approaching mode and not a method.

Disadvantage of this type of methods is that they have effectively a limited practical efficiency, due to the fact that they depend fully of the hazardous evolution of the development of physics, and thus they do not have their own, systematic, methodological basis for the synthesis of flowmeters and of the compound gauging structures. Under these circumstances, the state of the art essentially relies not on unitary methods of analysis and synthesis, but in fact only on approaching modes. Consequently, they are subject to random and intuitive criteria, and implicitly require a complex, laborious, long lasting and very costly effort of investigation and synthesis / configuration of the flowmeters, respectively of the compound gauging structures.

On the other hand, these types of approaches are becoming more and more inefficient, due to the progressive increase of the necessary investigative effort, the growing demand for permanent diversification, by specialization, of the fields of physics and their accelerated development.

N. Manohar ('Flowmeter Selection and Sizing', 02/11/2013, www.slideshare.net) and R. A. Furness (Flow Meas. Instrum., Vol 2 Oct 1991, pages 233-242) discusses the selection of a flowmeter for given specified criteria using a classification of flowmeters.

H. M. Motit (Automatizari si Instrumentatie 5-6/2011) discusses the concept of unitary synthesis & classification that provides a systematic way to structure flow metering.

The scope of the invention is defined by the claims.

Technical problem solved by this invention lies in systematic, predictable and logical coherent use of the unitary fundamental analytical and structural bases, specific to flow measurement in the elaboration and the defining of a unitary method for synthesis and design of the flowmeter and of the compound gauging structures, allowing its computer based implementation. This method thus enables the unitary design of any basic type of flowmeter or of compound gauging structures logically achieveable in the future,making thus possible to replace the current approach on the configuration / synthesis of flowmeters and of the compound gauging structures, which is fully and permanently dependent of and awaiting the development of the various fields of physics that they are investigating based on intuitive and random criteria.

The method according to this invention is based on the knowledge and the definition of unitary fundamental analytical and structural bases, specific to flow measurement, and initially ensures the storing, separately for flowmeters, and respectively for the compound gauging structures, of a specific "unitary reference logical network ", comprising the basic elements of their unitary bases, namely the basic structural schemes, the unique set of criteria expressed as synthesis logical questions to be followed, the sequence of their approach, the possible related responses, as well as logical restrictions imposed in the correlating of the response solutions, as elements already checked before developing the method, valid for all currently available flowmeters and compound gauging structures.

After the introduction and validation of the set of initial data for configuration and design of the structure of a new type of flowmeter or compound gauging structures, the method provides, related to them, for the successive scrutiny of the set of synthesis criteria and the successive selection of response solutions related to them, the basic constructive configuration of the new type of flowmeter or compound gauging structures being achieved by successively connection, by corresponding correlations, of those responses that are logically compatible each other.

The method is directly computer implementable and allows both making new types that respond both to the logical coherence of the synthesis of functional blocks of flowmeters, and to the analysis of any type of existing flowmeter or compound gauging structures.

The computer implemented method for unitary synthesis and design of flowmeters and of compound gauging structures, according to the invention, offers the following advantages:
- can be unitary implemented, independently of the development of various fields of physics, for all flowmeters and compound gauging structures, by knowing and applying the unitary analytical and structural bases, identified to be common to all flowmeters.
- it ensures the unitary approach of the configuration and design of flowmeters and compound gauging structures, respectively;
- due to its direct computer based implementation, it drastically reduces the effort, the time and the cost of configuration and design of the flowmeters and the compound of gauging structures, respectively.
- it ensures, through its application, the acceleration of the imagining and the achievement, on predictable and systematic basis, of new types of flowmeters and flowmeter combinations, which have not been achieved so far.

In the following, it is given an example on the implementation of the unitary method for synthesis and design of flowmeters and respectively of compound gauging structures, in relation with Figures 1, 2, 3, 4, 5, 6, 7, 8, 9, 10, 11, wherein:
Fig.1 Structure of conventional flowmeters - structural scheme S1;
Fig.2 Structure of monoinsertion flowmeters - structural scheme S2a;
Fig.3 Structure of multinsertion flowmeters - structural scheme S2b;
Fig.4 Structure of flowmeters with auxiliary fluid - structural scheme S4;
Fig.5 Structure of flowmeters with open derivation- structural scheme S5;
Fig.6 Structure of by pass flowmeters (closed derivation) with generation (q) by a differential static pressures - structural scheme S6a;
Fig.7 Structure of by pass flowmeters (closed derivation) with generation (q) by a dynamic pressure - structural scheme S6b;
Fig. 8 Structure of the secondary element of flowmeter- scheme S-ES ;
Fig.9 Structural scheme of compound gauging structures-type CD₁;
Fig.10 Structural scheme of compound gauging structures- type CD;
Fig.11 Structural scheme of compound gauging structures type CD₃;

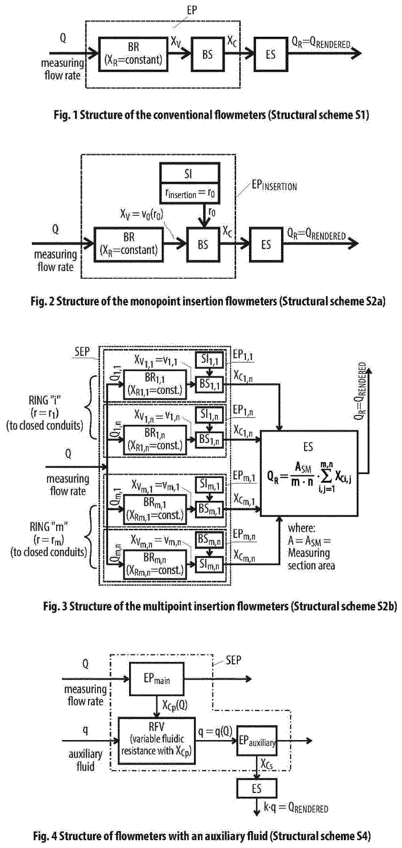

As shown in Figure 1, the structural scheme S1 of the conventional flowmeters, consists of a primary element EP and a secondary element ES, the primary element composed in its turn by a reference block BR which functionally provides the constant of the reference parameter X_{R} against variation of the measured flow rate Q, and a sensitive block BS detecting the variation of the parameter X_{V} and thus the variation of the flow rate Q.

The reference parameter X_{R} is kept constant against the variation in the flow rate Q by the functioning way of the block BR itself, parameter X_{V} being variable according to the variation of the flow rate Q, and the characteristic parameter-X_{C} is the output of the EP element, and the input to the element ES whose output parameter Q_{R}, the rendering parameter of the measured flow rate Q, expressed at the output of the secondary element ES.

As shown in Figure 2, the structural scheme S2a relating to the mono insertion flowmeters, is based on an monoinsertion system SI of the sensitive block BS, in addition to the structural scheme S1, and the element EP INSERTION represents the configuration of related primary element.

Structural scheme S2b of the multipoint insertion flowmeters shown in Figure 3, puts in evidence an index *i* of the *m* annulus (rings) in which is imaginary divided the total area *A* of the measuring section, and also marks the structural blocks and related parameters for each annulus in part, respectively an index *j* of the *n* circular segments in which is imaginary divided, in its turn, each annulus (ring), this index marking also structural blocks and related parameters of each circular segment in part.

EP_{1,1} ... EP_{m, n} represent some individual primary elements, each EP_{i,j} having the same structure and same parameters corresponding to those indicated for element EPᵢₙₛₑᵣₜ in the structural scheme S2a and corresponding to one of the circular segment of the total area *A* and a set of primary individual elements SEP.

The flowmeters with auxiliary fluid according to the structural scheme S4, shown in Figure 4, comprise a set of primary elements SEP, made by a main primary element EPₘₐᵢₙ, a supplementary primary element EP_{auxiliary}, between the two elements being characteristic placed a variable fluidic resistance RFV.

The flowmeter of this type reveals an auxiliary fluid flow *q,* a main characteristic parameter X_{Cp} and an additional characteristic parameter X_{CS}.

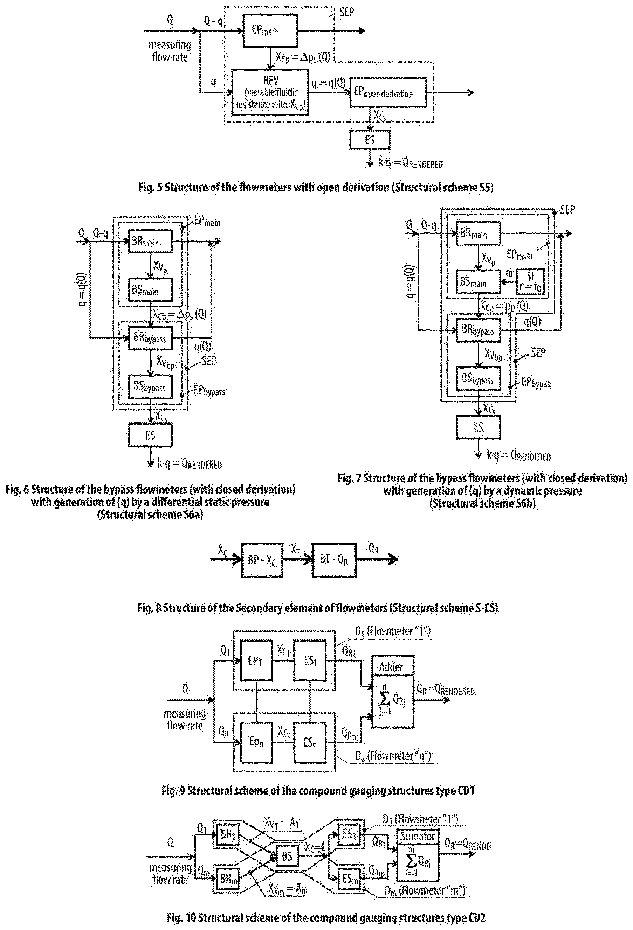

In the structure of the flowmeter with open derivation according to the structural scheme S5, shown in Figure 5, is a set of primary elements SEP consisting of a supplementary primary element EP_{open derivation} which communicates with an element EPₘₐᵢₙ by a variable fluidic resistance RFV. Within the, X_{Cp} = Δpₛ (Q) represents a main characteristic parameter, being made by the differential static pressures Δpₛ which depends on the flow Q. Formally Δpₛ depends on (Q-q) but since Q is much larger than q, it is practically considered that Δpₛ depends directly on Q.

The structure of the by pass type flowmeters(with closed derivation) with the generating (q) by a differential static pressure, according to the structural scheme S6a of Figure 6, highlights a set of primary elements SEP made up by a main primary element EP and a supplementary primary element EP_{bypass}. The intervening parameters have the significance of X_{Cp} = Δpₛ(Q) - a main characteristic parameter, achieved by the differential static pressure Δpₛ which, for the same reasons as indicated in the structural scheme S5, depends directly on the flow Q and on an additional characteristic parameter X_{Cs}.

The structure of the by-pass flowmeters (with closed derivation), with generating (q) by a dynamic pressure according to structural scheme S6b of Figure 7, highlights a set of primary elements SEP consisting of a main primary element EPₘₐᵢₙ and an additional primary element EP_{bypass}. The intervening parameters are, a main characteristic parameter X_{Cp} = p_{D} (Q), achieved by a dynamic pressure *p_{D}* which formally depends on the difference (Q-q) but since *q* is very small compared to Q, it is practically assumed that *p_{D}* depends on Q, and respectively an additional characteristic parameter X_{Cs},

The structure of the secondary element of flowmeter, scheme S-ES - of Figure 8, comprises a processing block of the output parameter of the primary part of flowmeter of BP-X_{C}, respectively characteristic parameter X_{C} and a transmission block BT - Q_{R} of the parameter Q_{R}, rendering the flow rate measured by the flowmeter, X_{T} representing the parameter transmitted resulting after processing of the characteristic parameter X_{C} of the block BP - X_{C}.

The structural scheme of the compound gauging structures CD₁ represented in Figure 9 comprises some individual flowmeters D₁ ... Dₙ, components of the compound gauging structure and an Adder-a structural block, specific to any type of compound gauging structure, which provides the calculation of the parameter Q_{R}, rendering the total measured flow rate Q and highlights some partial flows Q₁ .. Qₙ measured by flowmeters D₁ ... Dₙ. For the variants of compound gauging structures comprising flowmeters for open channels, the characteristic-parameter X_{Cj} are the level of the free liquid surface upstream of the measuring section, flowmeters, which use modular range flow and respectively the values pair of free liquid surface levels, pair upstream / downstream of the Measuring section for flowmeters which use non-modular flow range.

Structural scheme of the compound gauging structure type CD₂ shown in Figure 10 is composed of individual gauging structures D₁ ... Dₘ components of the compound gauging structure that have a Sensitive block BS related to the compound gauging structure, common to all individual gauging structures D₁ .. Dₘ of the compound gauging structure, and an Adder of measured partial flow rates Q₁ ...Qₘ, which ensures at its output the parameter Q_{R}, respectively the rendering of the total measured flow rate Q. The Sensitive block BS detects the variation of the passing areas (A₁ ... Aₘ) of the liquid flow depending on the partial flow rates Q₁ ... Qₘ, and converts them into variation of the level L of the free liquid surface in the upstream measuring section. The scheme highlights some partial flow rates Q₁ ... Qₘ measured by flowmeters D₁ ... Dₘ and respectively a unique characteristic parameter X_{C} = L, structurally common to all individual gauging structures, belonging to the compound gauging structure, where L is the level of free surfaces of the measured liquid, common to all measuring sections of the partial flow rates Q₁ ... Qₘ The liquid level is measured upstream of the measuring sections achieved constructively by each structural reference block BR₁ ... BRₘ of the individual flowmeters D₁ ... Dₘ in part, these blocks constructively achieving the measuring sections of the liquid flow rate, related to these individual gauging structures.

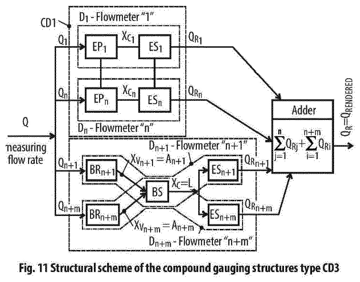

The structural scheme of the compound gauging structure type CD₃ represented in Figure 11 is made up by a compound gauging structure type CD₁ and a compound gauging structure type CD₂, connected in parallel, and an Adder which ensures the calculation of the total measured flow rate Q, and its rendering by the parameter Q_{R}, by the summing up some parameters Q_{R1}....Q_{Rn}, by the summing up some parameters Q_{R1}...Q_{Rn+m}, which render some measured partial flows rates Q₁....Qₙ₊ₘ. Thus, some individual gauging structures D₁ ... Dₙ are components of the structural scheme related to the compound gauging structure type CD₁, and Dₙ₊₁ ... Dₙ₊ₘ represent some individual gauging structures, components of the structural scheme related to the compound gauging structure type CD₂.

It should be noted that a combination of type CD₃ is only theoretically possible in principle, by proposing parallel coupling of a compound gauging structure of type CD₁, with a compound gauging structure of type CD₂ under conditions in which gauging structures D₁ ... Dₙ associated with the compound gauging structure type CD₁ are flowmeters for closed conduits. However, practically it is difficult to make this variant because it is necessary to ensure the continuity of the total flow measuring range, which includes both the low values of the flow measuring ranges of flowmeters for closed conduits, and also the high values of the flow measuring ranges corresponding to flowmeters for open channels.

The method provides the logical generation of appropriately coded response solutions for a set of 14 criteria for flowmeters, respectively 17 criteria, for compound gauging structures, grouped in 5 "criteria groups" of a constructive-functional nature that can define in a complete manner the construction and operation of any type of conventional or unconventional flowmeter, or any compound gauging structures. Thus, for flowmeters, the five groups of criteria are:
I- use destination of flowmeters;
II- basic analytical mode of expression of the measured flow rate;
III- overall flowmeter structure;
IV- configuration of the primary part of the flowmeter;
V configuration of the secondary part of the flowmeter.

As mentioned above, for flowmeters 14 analytical / synthesis criteria are defined as follows:
1. type of way that measured fluid flows;
2. type of the measured flow (Q);
3. basic analytical expression of the measured flow rate;
   *It is considered that all analytical relations of the "Conventional Expressing (Measuring) of Q Flow Rate" use the generic relationship: Q = X_{R}* · *X_{V}* where:
   *X_{R}* = *Reference parameter= Functionally constant, against to the variation in time of the measured flow rate (Q)*
   *X_{V}* = *Variable parameter depending on Q;*
   *For "Direct Conventional Expression":*
   *a) X_{R} has the variants: V_{constant}; m_{constant}; τ*_{constant}
   *b) X_{V} has, depending on its corresponding variant* of *X_{R}, variants* τ⁻¹_{variable}; V_{variable}; m_{variable};
   *For "Indirect Conventional Expression":*
   *a) X_{R} has the variants: A_{constant}; V_{constant}*
   *b) X_{V} has, depending on its corresponding variant X_{R}, the variants: v_{variable}*; *Avariable*
   *"Unconventional Expression of the Flow rate Q" is done in variants:*
   *a) Depending on the "Variable parameter" (X_{V}* = *speed*/ *local speeds measured in the SM section), with constant maintaining of the "Reference parameter" (X_{R} = A=A_{SM}* = *area-of the measuring section*)*.*
   *b) Depending on the secondary flow, dependent on the main flow Q*
4. Overall structural schemes of the flowmeter which solves (materializes) the "response solutions" related to Criterion no. 3 ;
5 Overall structural scheme of the primary part of flowmeter;
6.Configuring the BR block ;
7Functional position of (BR) related to flowmeter body ;
8 Relative functional position between parts of (BR) ;
9 Output parameter of (BR) = Variable parameter (X_{V}) It is considered that for all structural variants of flowmeters:
   X_{V} = Output parameter of (BR) Ξ Input parameter in (BS), and the (X_{V}) solutions have the variants depending on the type of (BR);
10. Participation of (BR) in achieving of (BS) ;
11. Output parameter of (BS) = Characteristic parameter(X_{C}) ;
   It is taken into consideration that for all structural variants of flowmeters:
   X_{C} = Output of (BS) Ξ Output parameter of (EP)
   The solutions for the characteristic parameter (X_{C}) rendered by its usual physical expressions depend on the Variable parameter (X_{V}) which, obtained at the output of (BR), depends in its turn on the type of (BR). The solutions of X_{C} are the same for both "conventional flowmeters" and "unconventional flowmeters"
12. Detailing criteria of the (BS) configuration ;
13. Configuration Module of BP - X_{C}, on processing the input parameter in ES (referred to as "characteristic parameter X_{C}") ;
14. Configuration module of the block BT - Q_{R}, on the expression of Q_{R}, the parameter of the rendering the measured flow rate.

The method of unitary synthesis and design of any type of flowmeter is based on the following of a procedural sequence of several processing stages, each stage assuming browsing of algorithm able steps which proves the essence of the computer program that implements the present method.

The first stage envisages creating and storing of the unitary logical reference network, for configuring a new basic type of flowmeter, network made up of:
Figures 1 ....7 - Variants of structural schemes of flowmeters
Figure 8 - Basic structure of the secondary element of flowmeter (Scheme S-ES)
Table 1 - Correlation variants of the reference parameter solutions X_{R} with the variable parameter solutions X_{V}, for the configuration of the flowmeters
Table 2 - Reference matrix of criteria and related solutions, necessary to be followed for the configuration of the flowmeters
Table 2A - Usual solutions to achieve the characteristic parameter X_{C}, related to criterion 11 of Table 2 (correlated with solutions for BR and X_{V})
Table 3 - Logical incompatible sequences, which need to be avoided between certain solutions responding to Criteria no. 2.1 and 3 from Table 2
Table 4 - Logically incompatible sequences that need to be avoided between certain solutions, responding to Criteria 2.1 and no. 6.2 from Table 2
Table 5 - Logical incompatible sequences, to be avoided between certain synthesis solutions related to Criteria no. 6.2, 7, 8 from Table 2
Table 6 - Necessary correlations between constructive solutions for configuration and the design of the secondary element ES, and the overall structural schemes of the flowmeters

**Table 1 Correlation variants of the reference value solutions X_{R} with the variable value solutions Xv, for the configuration of the flowmeters**

| Mode of expression of the flow rate | Basic solutions for expressing the analytical flow rate | Variants usable for correlating the reference and variable values |
|---|---|---|
| Direct expression | Q_{V} = V/τ | X_{R} = V; X_{V} = τ |
| | | X_{R} = τ; X_{V} = V |
| | Qₘ = m/τ | X_{R} = m; X_{V} = τ |
| | | X_{R} = τ; X_{V} = m |
| Indirect expression | Q_{V} = A · v | X_{R} = A; X_{V} = v |
| | | X_{R} = v; X_{V} = A |
| | Qₘ = A · V · ρ | X_{R} = A; X_{V} = v |
| | | X_{R} = v; X_{V} = A |

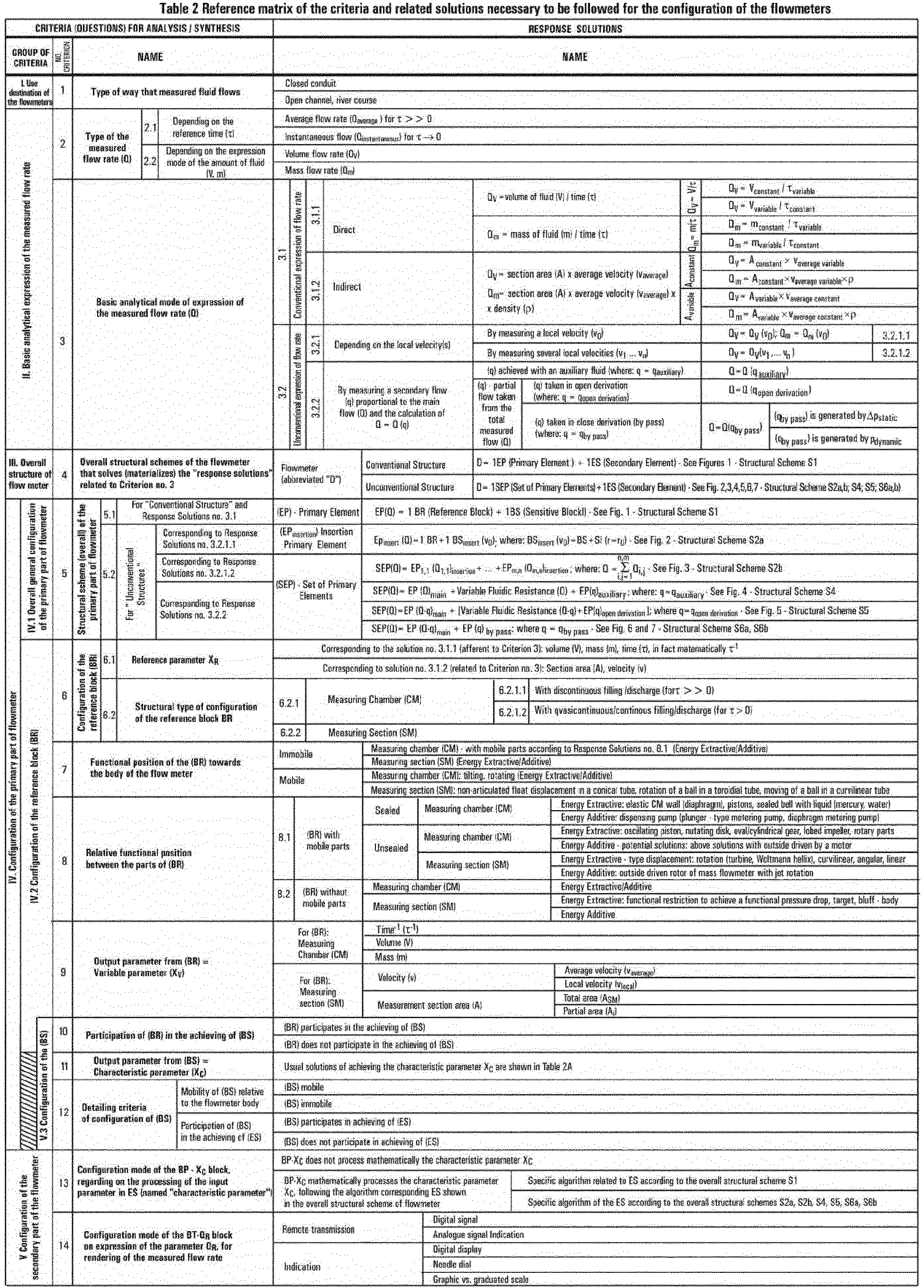

**Table 2A Usual solutions to achieve the characteristic parameter X_{C}, related to Criterion no. 11 of Table 2 (correlated with solutions for BR and X_{V})**

| Type of BR | Parameter of X_{R} | Usual solutions to achieve the characteristic parameter (X_{C}) |
|---|---|---|
| Measuring chamber (CM) with discontinuous filling / discharge | τ⁻¹ | Number of electrical pulses |
| | V | Liquid level (level of the liquid-gas separation surface) |
| | | Bell displacement |
| | | Piston displacement |
| | m | Output signal of the balance |
| Measuring chamber (CM) with continuous filling / discharge | τ⁻¹ | Switching frequency of (CM) |
| | | Rotation frequency of (CM) |
| | | Linear displacement of deformable wall of (CM) |
| | | Linear displacement of no-deformable wall of (CM) - sealed |
| | | Wall oscillation frequency of (CM) |
| | | Wall / Walls rotation frequency of (CM) |
| | | Wall rotating sliding frequency of (CM) |
| | A | Linear displacement of (SM) |
| | | Static pressure drop on the mobile annular orifice plate |
| | | Linear displacement of the mobile component of (SM) |
| | | Angular movement of the mobile component of (SM) |
| | | Free liquid surface level (heat) |
| | | Concentration (injected substance) obtained following the mixing with the liquid which flow rate is measured |
| | v | Rotation velocity of the mobile part of (SM) |
| | | Oscillation frequency of the mobile part of (SM) |
| | | Differential static pressures (Δpₛ) |
| | | Dynamic pressure (p_{D}) |
| | | Force |
| | | Frequency of the swirled jet |
| Measuring section (MS) | | Electromotive tension |
| | | Ionization current |
| | | Concentration (injected substance), obtained after mixing with the liquid which flow is measured |
| | | Magneto-nuclear resonance (MNR) |
| | | Optical parameter |
| | | Ultrasonic parameter |
| | | Rotation Frequency of (SM) |
| | | Curvilinear displacement of (SM) |
| | | Transit time of (SM) |
| | | Angular displacement of rotor |
| | | Thermal parameter |
| | | Phase shift between signals (proportional to deformation of the measuring tube) |

| | | |
|---|---|---|
| Note: The solutions suggested for the characteristic parameter X_{C} are the usual ones and are not limitative and can be completed at any time | | |

**Table 3 Logical incompatible sequences, which need to be avoided between certain response solutions related to Criteria no. 2.1 and 3 from Table 2**

| Synthetic criterion (code number) | | Response solution with incompatible sequences | |
|---|---|---|---|
| 2.1 | | Q_{average} | Q_{average} |
| 3 | 3.1 | Flow rate conventionally - indirect expressed | - |
| | 3.2 | - | Flow rate unconventionally expressed |

**Table 4 Logical incompatible sequences which need to be avoided between certain response solutions, related to Criteria no. 2.1 and no. 6.2 from Table 2**

| Synthesis criteria (code number) | Response solution with incompatible sequences | | | |
|---|---|---|---|---|
| 2.1 | Q_{average} | Q_{average} | Qᵢₙₛₜₐₙₜₐₙₑₒᵤₛ | Qᵢₙₛₜₐₙₜₐₙₑₒᵤₛ |
| 6.2 | Solution no.6.2.1.2 (Measuring chamber with quasi-continuous / continuous filling/discharge) | Solution no.6.2.2 (Measuring section) | Solution no. 6.2.1.1 (Measuring chamber with discontinuous filling / discharge) | Solution no.6.2.1.2 (Measuring chamber with quasi-continuous filling / discharge) |

**Table 5 Logical incompatible sequences, which need to be avoided between certain response solutions related to Criteria no. 6.2, 7, 8 from Table 2**

| Synthesis criterion (code number) | Response solutions with Incompatible sequence | | | | |
|---|---|---|---|---|---|
| 6.2 | Measuring chamber (CM) with filling /discharge | | | Measuring section (SM) | Measuring section (SM) |
| | with discontinuous filling / discharge | with quasi-continuous filling / discharge | with continuous filling / discharge | | |
| 7 | Immobile (CM) | Mobile (CM) | Immobile (CM) | Immobile (SM) | Mobile (SM) |
| 8 | (CM) without moving parts | (CM) with moving parts | (CM) without moving parts | (SM) with sealed moving parts | (SM) with sealed moving parts |

**Table 6 Necessary correlations between constructive solutions for synthesizing of the Secondary Element configuration and of the overall structural schemes of flowmeters**

| Structural code of flowmeter | Response solutions usable in the synthesis of the secondary element (ES) |
|---|---|
| S1 | • Block BP-X_{C} : does not mathematically process the characteristic parameter X_{C} |
| | •Block BT-Q_{R} : provides local indication of the flow rate (needle with dial) |
| | Note: The correlation of the above solutions for the two blocks that compose ES (according to Fig.8) is usable for variable area flowmeters that only provide local flow indication, respectively of Q_{R} |
| S1, | • Block BP-X_{C} : mathematically processes the characteristic parameter X_{C} |
| S2a, | |
| S2b, | • Block BT-Q_{R} : All solutions shown in Table 2 |
| S4, | |
| S5, | |
| S6a, | |
| S6b. | |

Second defining stage of method, involves entry and validation of the "set of initial configuration data" of a new basic type of flowmeter.

Within it, it is entered the "set of initial configuration and structural design data" of a new basic type of flowmeter, checking if the configuration and design data initially entered are the minimum necessary, responding to the criteria no.1,2,3 of Table 2.

In case of missing data, the "set of initial data" will be completed with missing data, according to the criteria no.1, 2, 3 of Table 2.

The third stage involves establishing, for the flowmeter to be configured, the mode of analytical expression of the measuring flow rate and the structural group embodying its structural ensemble

In a first step, it is checked whether can be validated the "set of input data" as usable for starting configuration and design of a new basic type of flowmeter, and in negative case being modified those input data which do not allow selection of logically consistent solutions among those indicated in Table 2, as possible in this respect, according to the criteria no. 1, 2, 3.

With the view to establish the mode of analytical expression of the measuring flow rate, it is performed the sequential selection among the solutions related to criteria no. 1, 2, 3 of Table 2 and Table 3 of those which, using the "initial configuration and design data", perform the complete and coherent characterization of the mode of analytical expression of the measuring flow rate, which must be ensured by the configuration and design of the new basic type of flowmeter

In the third stage, it proceeds to the setting up of the structural group in which will be embodied the overall structural scheme of the flowmeter.

It is thus analyzed in which of the structural group it will be embodied the new flowmeter to be configured, according to the analytical expression of the flow rate, set out previously.

If the flowmeter has the overall structural scheme of a conventional type, it is used the "conventional structure" according to the solution related to the criterion no. 4 of Table no. 2, respectively structural scheme S1 shown in Figure 1 .

Otherwise, it is used a "unconventional structure" belonging to the group of structures related to criterion no. 4 of Table 2, selecting one of the structural schemes S2Aa, S2b, S4, S5, S6a, S6b shown in Figures 2..7.

The fourth stage is intended to configure the primary part of the flowmeter, for both conventional flowmeters and unconventional flowmeters.

This stage provides in a first sub-stage the setting up of the structural type for configuration of the primary part of the flowmeter.

The fourth stage then proceeds with the design of the primary part of the flowmeter, provided by a primary element EP (for flowmeters with "conventional structure") respectively a set of primary elements SEP (for flowmeters with "unconventional structure") set made by connections between two or more EP or between one or more EP with "conventional structure" from Figure 1 coupled with an auxiliary device (insertion system, fluidic resistance) according to the followed variant of "unconventional structure".

Consequently, this stage is particularly complex and ensures solving of the same objectives, both for the configuration and design of "conventional structure" type flowmeters and those with "unconventional structure", by carrying out procedural steps which, due to the specificity of the two structural types indicated above are grouped as follows:

### A. For Conventional Flowmeters -DC [0044]

Step 1- DC - Identification of the primary element EP as the structural mode of achieving of the primary part of the flowmeter, according to the solution corresponding to the sub-criterion no.5.1 of Table 2;
Step 2-DC - Setting up the overall configuration of the primary element EP, composed by the reference block BR and the sensitive block BS, according to the solution related the sub-criterion no. 5.1 of Table 2 which corresponds to the structural scheme $1 of Figure 1;
Step 3-DC- Setting the actual physical parameter for achievement of the reference parameter Xp among the variants indicated in Table 1 in accordance with the previously established response solutions corresponding to criteria no. 1 and 2 of Table 2;
Step 4- DC- Setting up the basic solution embodying the reference block BR, from the variants indicated in Table 2, corresponding to criterion no. 6.2, by avoiding the logically incompatible sequences between the solutions, shown in Table 4;
Step 5-DC - Constructive configuration of the reference block BR by sequentially choosing of the constructive solutions corresponding to criteria no. 7 and 8 of Table 2, and correlating them by avoiding the logically incompatible sequences between solutions, indicated in Table 5;
Step 6-DC- Setting the actual physical parameter for the achievement of output parameter of the reference block BR (respectively the "variable parameter Xy") among the variants of the response to criterion no. 9 of Table 2, corresponding to the type of BR previously set, solution for Xy being necessary to correlate with the solution set above for Xp, so as to be within the correlating variants indicated in Table 1;
Step 7 DC - Initiation of the design of BS by choosing of the constructive connecting solution of BR with BS, among the response solutions related Criterion no. 10 of Table 2;
Step 8 - DC - Setting the actual physical parameter for the achievement of the output parameter from BS (i.e., the "characteristic parameter X,.") starting with the investigation of the response solutions indicated in Table 2A, solutions related to criterion no.11 of Table 2, according to the previously chosen solutions for the constructive type of the block BR and for variant of the parameter X,.
Step 9 - DC - Define the configuration and design of BS by choosing the appropriate constructional configuration solutions among the responses related to criteria no.11 and 12 of Tables 2 and 2A;
Step 10 - DC - Check the condition that the solution set for the Primary element EP of the "conventional flowmeter" is new and not be found at the existing flowmeters.

If the result is positive, go to Stage 5.

If the result is negative, return to Step 3-DC, after modifying the constructive solution initially chosen for BR, and then reprocessing the steps 3-DC ... 10-DC.

If the result of the new verification is positive, proceed to Stage 5, and if it is negative, return to Step 7- DC, after modifying the constructive solution initially chosen for BS, and then reprocess steps 7- DC ... 10-DC.

This cycle is repeated until, after the processing of Step 10, get an affirmative response, when it is possible to move to Stage 5.

### B. For unconventional flowmeters - DN :

Step1-DN- Generic identification of the set of the primary elements SEP as structural mode of achieving the primary part of the flowmeter, namely the selection of its concrete structural configuration, among the variants of the response solutions corresponding to the sub-criterion no.5.2, indicated in Table 2, corresponding to the structural schemes $2a, S2b, $4, S5, S6a, S6b, shown successively in Figures 2,3,4,5,6,7.
Step 2-DN- Unitary design of each of the primary element EP component of the specific structure previously estab- lished for the set of the primary elements SEP of the unconventional flowmeter to be configured, by processing the same steps 2- DC .. 9- DC, corresponding to the conventional flowmeter configuration.
   Then proceed to Step 3-DN (for SEP made in structural variants S2a, S2b, S4, S5, S6b) or directly to Step 4-DN (for SEP made in structural variant S6a).
Step 3-DN - Provides the design of afferent devices related to some of the structural variants of SEP, as follows : insertion system SI (for schemes S2a, S2b, S6b), respectively variable fluidic resistance RFV (for structural schemes $4, $5).
Step 4-DN - Constructive and informational implementation of the connections between the primary elements EP components of the Set of Primary Elements SEP previously set, following its specific structural scheme, for respective unconventional flowmeter configured.
Step 5- DN- Check whether the solution configured for the Set of Primary Elements (SEP) of the "unconventional flowmeter" is new and it is not found in the existing flowmeters;
   If the result is positive, go to Stage 5. If the result is negative go back to step 2-DN and reprocess steps 3-DC ... 9- DC, then proceed to step 3-DN (if required processing with-by the specification from step 2-DN) and then with the steps 4-DN, 5-DN, after modifying the constructive solution chosen initially for BS, to one or more EP within the SEP.

If in the end the test result is positive, go to Stage 5, and if negative go back to step 2-DN and reprocess steps 7-DC ....9-DC, then proceed to step 3-DN (if required by the specification from step 2-DN) and then with steps 4-DN and 5-DN, after changing the constructive solution initially chosen for BS to one or more EPs in the SEP. If the result of the check is finally positive, go to Stage 5, if not, go back to step 7-DC related to step 2-DN, repeating the same cycle, until an affirmative response is obtained, following the verification in step 5-DN.

Next, for both conventional flowmeters and unconventional flowmeters, the following stages are proceed suc- cessively:
Stage 5 involves the configuration of the secondary part - the secondary element ES - of the flowmeter, which in turn has as a first sub- stage the configuration of overall structural scheme of ES, a second sub-stage the unitary constructive design of the processing block BP - 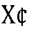 and then a third sub- stage, the unitary constructive design of the transmission block BT-Qp.

According to this working stage, in a first step, the constructive configuration of ES is carried out, following the overall structural scheme S-ES shown in Figure 8.

In a later step takes place the analysis of, in terms of the configuration of the processing block BP-Xc, of the structural scheme indicated for ES, within the overall structural scheme chosen for the flowmeter at the beginning of its configuration.

In Step 3 takes place the achievement of BP- 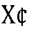 , according to that basic solution corresponding to criterion no.13 of Table 2, which corresponds to the analysis from the previous step, using a constructive variant correlated with the structural scheme of the flowmeter assembly shown in Table 6.

In step 4 of the stage, it is constructively achieved the transmission block BT-Qp, by choosing a solution among those related to criterion no. 14 of Table 2.

Stage 6, envisages the achievement of the structural assembly of the new type of flowmeter configured, by connecting the constructive solutions obtained in the previous steps, and involves firstly, the editing of the overall detailed constructive structural scheme finalized for the new basic type of the flowmeter configured, and finally setting the name of the new basic type of flowmeter, depending on the constructive solution used for the design of the primary part thereof.

The method for unitary synthesis and design of compound gauging structures involves, in a similar manner with that used for individual flowmeters, conducting several procedural working stages, where each stage suppose proceeding of algorithm based procedural steps which constitutes the essence of the computer program which implements the said method.

In a first stage, it is created and stored the "reference unitary logical network", necessary to for configure a new compound gauging structure.

Said network is built up of:
Figures 1... 7 - Variants of basic structural schemes of flowmeters component of compound gauging structures
Figures 9... 11 - Variants of basic structural schemes of compound gauging structures
Table 7 - Reference Matrix of the criteria and of their related solutions required for configuring compound gauging structures
Table 8 - Main compound gauging structures achieved till now

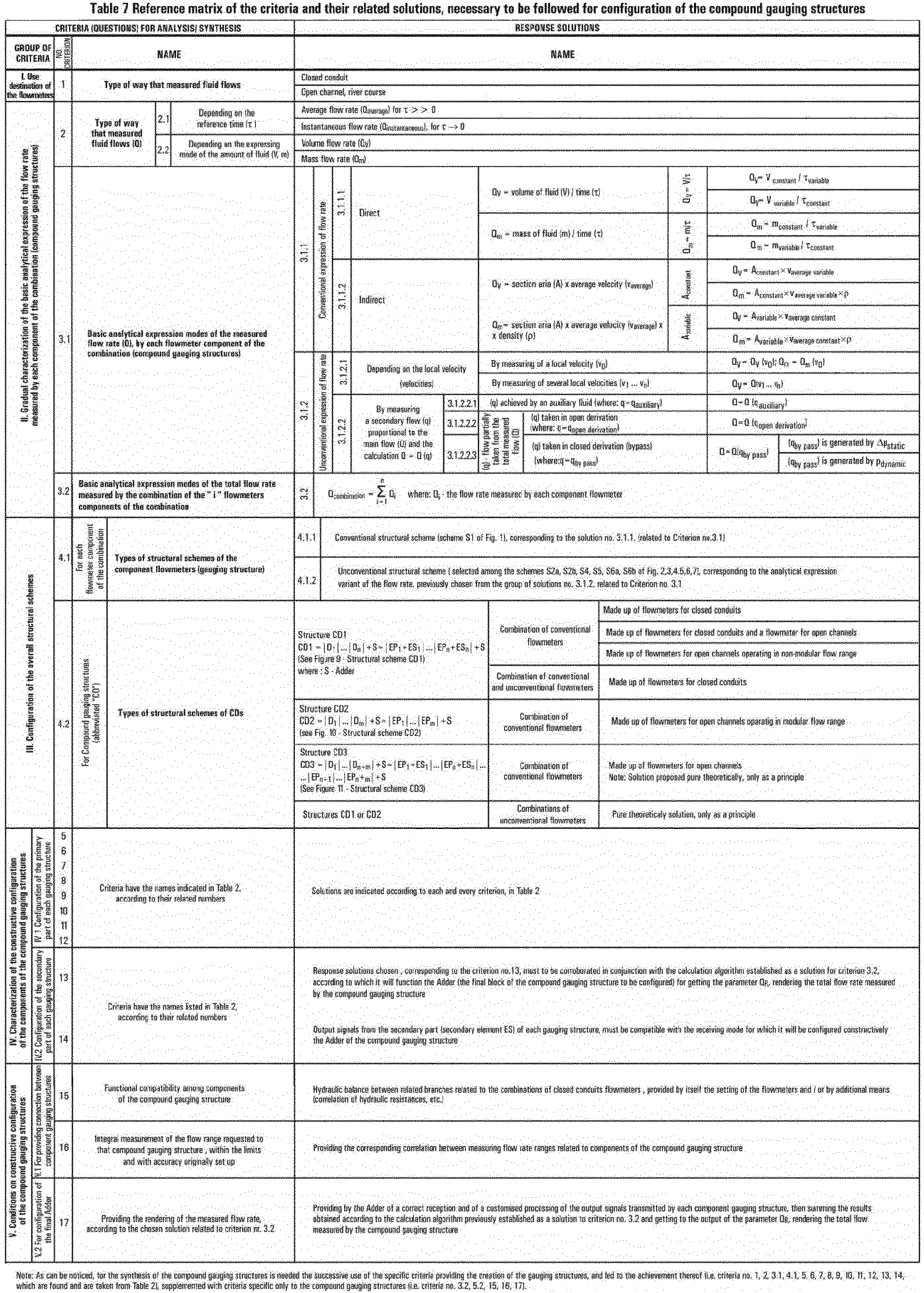

**Table 8 Main compound gauging structures - CD - achieved to date**

| **Type of the structural scheme of the CD** | **Type of way that measured fluid flows** | **Compound gauging structures (abbreviated "CD")** |
|---|---|---|
| CD1 | Closed conduit | Compound gauging structures of two rotary vane/propeller flowmeters |
| | Open channel | Compound gauging structure, operating in non-modular flow range, which comprise: |
| | | - triangular - profile weirs |
| | | - flat - V weirs |
| | | Compound gauging structures which comprise underflow gates that use non-modular flow range |
| | | Compound gauging structures, operating in modular flow range: |
| | | 1. Which comprise the following weirs: |
| | | - thin - plate weirs |
| | | - triangular - profile weirs |
| | | - trapezoidal - profile weirs |
| | | - rectangular broad - crested weirs |
| | | - rounded - nose horizontal crested weirs |
| | | - flat - V weirs |
| | | - V - shaped broad - crested weirs |
| | | - streamlined - triangular profile weirs |
| | | 2. Which comprise the following flumes: |
| CD2 | Open channel | a. Parshall and SANIIRI |
| | | b. According to ISO 4359, with: |
| | | - rectangular transverse profile |
| | | - trapezoidal transverse profile |
| | | - "U" transverse profile |
| | | 3. Which comprise a combination between gauging structures specified above at no. 1 and no. 2 |
| | | 4. Which comprise gates |
| | | Note: These compound gauging structures operate only in a modular flow range, that allows a common measurement of the water level (with one single device - namely a sensitive block BS common to all component gauging structures), only upstream of the measuring areas of the component gauging structures, but not downstream of them. |

For compound gauging structures, the groups of the logical criteria (queries) which sequential browsing ensures either the analysis of existing structures or the synthesis of new combinations, are as follows:
I- use destination of the flowmeters;
II- successive characterization of the basic analytical expression of the flow rate measured by the flowmeters, composing the compound gauging structure;
III- configuration of overall structural schemes;
IV- characterization of the constructive configuration of the flowmeters composing the compound gauging structure;
V conditions regarding the constructive configuration of the flowmeters composing the compound gauging structure

The first three groups of criteria mentioned above include, with reference to the flowmeters composing the compound gauging structure, the 14 criteria (questions) and the corresponding response solutions previously indicated, that ensure the unitary synthesis and design of the flowmeters.

In addition to these, the specificity of the configuration and structural design of the compound gauging structures, with reference to Table 7, requires additional use of two sub-criteria no.3.2 and 4.2 and of three criteria no.15, 16, 17 as follows:
Sub-criterion 3.2- Analytical mode of expression of the total flow rate measured by the ensemble of flowmeters composing the compound gauging structure.
Sub-criterion 4.2- Types of structural schemes of compound gauging structures.
Criterion 15.- Functional compatibility between flowmeters composing the compound gauging structure.
Criterion 16.- Full measurement of the flow range required by the combination, within the limits and with the accuracy initially set
Criterion -providing the rendering of the measured flow rate, according to the solution chosen for the sub-criterion no.3.2

The second stage involves input and validation of the "set of initial configuration data" of a new basic type of compound gauging structure, whereby after, it is checked if the inputted "initial data for configuration and design", are the minimum needed, by responding to the provisions of criteria 1, 2, 3.1, 3.2 of Table 7, and in the negative case being necessary to complete the "set of initial configuration data", with the missing data, against the previsions of criteria 1,2, 3.1,3.2 of Table 7.

Then it is checked whether one can validate the "set of input data" as used for starting the configuration of a new basic type of compound gauging structure, and in negative case being made modifications to those input data which do not allow selection of solutions logically consistent with data, indicated as possible in this respect in Table 7, according to criteria no. 1,2, 3,1, 3.2.

The third stage, provides the setting for the component gauging structures of the future compound gauging structure, of the analytical mode of expression of flow rate and of the type of the structure.

In a first sub-stage it is established, on the one hand the analytical mode of expression of the measured flow rate and on the other hand, the type of structural group as " conventional structure" or "unconventional structure", chosen to be within the structural schemes of the component gauging structure of the compound gauging structure to be set up. In this regard, it is provided the consecutive selection among the solutions related to Criteria 1, 2, 3.1 of Table 7, of those consistent with the "initial design data" and ensures the complete and coherent characterization of the analytical expression of the flow rate measured in the manner required by these "data", which must be ensured by the gauging structures then chosen as components of the compound gauging structure, for its configuration.

If the solution chosen for the analytical expression of the flow rate is the conventional expression, the component gauging structures of the compound gauging structure, must have the structural scheme of the conventional type and the selection of the component gauging structures is, among those which have a "conventional structure" according to the solution code 4.1 .1 related to criterion no. 4.1 of Table 7, respectively Schematic scheme S1 from Figure1. The component gauging structures of the compound gauging structure must accordingly be "conventional flowmeters". In the event that the solution chosen for the analytical expression of the flow rate, is the "unconventional expression", the component gauging structures of the compound gauging structure have a structural scheme of unconventional type, and the selection of the component gauging structures, is made among those having the structure in accordance with, those of variants of "unconventional structural scheme"S2a, S2b, S4, S5, or S6b corresponding to solution or solutions previously chosen for analytical expression of flow rate within the solution group code 3.1.2 of Table 7.

Therefore the component gauging structures must have a structural scheme of unconventional type, being called "unconventional flowmeters"

The fourth stage defined as Setting up the new compound gauging structure, abbreviated "CD", firstly involves choosing the type of structural scheme to follow in the setting up the compound gauging structure, among solutions CD₁, CD₂, or CD₃ related to criterion no.4.2 of Table 7.

It is then passed at establishing, among solutions related to sub-criterion no.4.2 of Table 7 of that type of constructive solution to be followed in achieving the compound gauging structure, to be configured which complies with the previous options regarding: the structural type of the component flowmeters (conventional or unconventional), respectively the type of transport line of the fluid to be measured. Then it is set up the compound gauging structure CD by choosing the component gauging structures among those pre-selected preliminary by following the previous stages and ending with their corresponding coupling.

It is then finalized the setting up of the compound gauging structure by solving the conditionings provided by the criteria no. 15, 16, and 17 of Table 7, by using their related solutions.

The fifth stage consists in validating the novelty of the configured compound gauging structure, verifying that the configured compound gauging structure is among those achieved so far and shown in Table 8, and in the negative case it is proceeded to the editing of the detailed constructive scheme for the new basic type of set up compound gauging structure and the denomination of the new type of compound gauging structure. In affirmative case, the component gauging structures found in existing combinations are replaced with other gauging structures, among those already pre-selected as appropriate, by browsing the previous stages. The cycle is repeated until it is not found the compound gauging structure as set up in Table 8.

## Claims

1. Computer implemented method for unitary synthesis and design of flowmeters and of compound gauging structures, **characterized in that** in order to achieve any basic type of flowmeter, conventional or unconventional, both among the existing ones, as well as among those logical imaginable and achievable, it comprises browsing the following stages :
Stage 1 - Creating and memorizing the unitary reference logic network needed to configure a new type of flowmeter;
Stage 2 - Input and validating "set of initial setting up data" of a new basic type of flowmeter;
Stage 3 - Establishing, for the flowmeter to be synthesized, of analytical mode of expression of the measuring flow rate and of the structural group in which could be fitted the overall structural scheme of the flowmeter;
Stage 4 - Configuration the primary part of the flowmeter, which involves the setting up of the structural type of the primary part of the flowmeter, provided by a primary element EP (for "conventional structure" made up by the reference block BR and the sensitive block BS), respectively, by a set of primary elements SEP, (for "unconventional flowmeters", set made up by the connection between several EP or by the connection between one or two EP and an auxiliary device) and continuing for " conventional flowmeters" with the unitary design of the primary element EP, the setting up of the overall structure of the primary element EP, the unitary constructive design of the Reference Block BR, the unitary constructive design of the Sensitive Block BS and validation of the novelty of the synthesized EP solution, and for "unconventional flowmeters", the setting up of the structural configuration of SEP, the design of the component primary elements EP, the design of the auxiliary devices (for some structural variants), the constructive and informational achievement of the connections between the primary elements EP composing the SEP followed by validating the novelty of the solution of the synthesized SEP;
Stage 5 - Configuration of the secondary element ES of the flowmeter, which consists of setting up the overall structural diagram of ES, the unitary constructive design of the processing block BP - X_{C} and respectively the unitary constructive design of the transmission block BT- Q_{R} ;
Stage 6 - Achieving the structural assembly of the new type of configured flowmeter by connecting the constructive solutions obtained in the previous stages;
wherein the implementation of stage 2 involves the following procedural steps:
Step 1 - Input of the "set of initial structural configuration and design data" of a new basic type of flowmeter that meets criteria 1, 2, 3 of Table 2 and the provisions of Table 2A;
Step 2 : Validate the "input data set" that can be used to start the configuration and the design of a new basic type of flowmeter by filling in the missing data and modifying those input data that do not allow the selection of logically consistent solutions from the other solutions shown in Table 2, as being possible in this respect, according to Criteria no.1, 2, 3;
wherein the implementation of stage 3 involves following procedural steps:
Step 1 - Consecutive selection among the solutions related to criteria no. 1, 2, 3 of Table 2 of those which, using the "initial configuration and design data", perform the complete and coherent characterization of the analytical mode of expression of the measuring flow rate, which must be ensured by the configuration and the design of the new basic type of flowmeter;
Step 2- Setting up the structural group which fits the new flowmeter to be configured, according to the analytical mode of expression of the flow rate set out above, and then in the case of a conventional flowmeter, it is used the conventional structure according to the solution related to criterion no.4 of Table no. 2, respectively the structural scheme S1 shown in Figure 1, and in the case of an unconventional flowmeter it is used the " unconventional structure" belonging to the Group of structures related to criterion no.4 of Table 2, choosing one of the structural schemes S2a, S2b, S4, S5, S6a, S6b shown in Figures 2 ... 7;
wherein the implementation of stage 4 involves following the next steps:
A. For conventional flowmeters
Step 1-DC Identifying the primary element EP as the structural mode of achieving the primary part of the flowmeter, according to the solution related to sub-criterion no.5.1 of Table 2, which corresponds to the structural diagram S1 of Figure 1;
Step 2-DC Establishing the overall configuration the primary element EP, made by the reference block BR and the sensitive block BS according to the solution related to sub-criterion no. 5.1 of Table 2 corresponding to the structural diagram S1 of Figure 1;
Step 3-DC- Establishing the actual physical parameter to be achieved by the reference parameter X_{R} among the variants indicated in Table 1 in accordance with the previously established response solutions corresponding to criteria no.1 and 2 of Table 2;
Step 4 - DC - Establishing the basic solution for achieving the reference block BR among the variants indicated in Table 2, corresponding to sub-criterion no. 6.2, by avoiding the logically incompatible sequences among the solutions shown in Table 4;
Step 5-DC - Constructive design of the reference block BR by sequentially establishing the constructive solutions corresponding to criteria no.7 and 8 in Table 2, and correlating them by avoiding the logically incompatible sequences among the solutions shown in Table 5 ;
Step 6-DC - Determining the actual physical parameter to be achieved at the output from the reference block BR (namely, the "variable parameter X_{V}") among the response possibilities related to the criterion no.9 of Table 2, corresponding to the type of BR previously set, the solution for X_{V} must be correlated with the solution stated above for X_{R}, so as to be within the correlation variants indicated in Table 1;
Step 7- DC- Starting the design of BS by choosing the constructive solution for connecting the BR with the BS, among the response variants related to the criterion 10 in Table 2;
Step 8-DC- Setting the actual physical parameter for achieving the output parameter from BS (or the "characteristic parameter X_{C}"), starting with the investigation of the response solutions shown in Table 2A, related to the criterion no.11 of Table 2,
corresponding to the previously chosen solutions for the constructive type of block BR and for the variant of X_{V;}
Step 9 - DC - Finalizing the configuration and design of BS by choosing among the responses related to criteria no.11 and 12 of Tables 2 and 2A of the corresponding constructive configuration solutions;
Step 10 - DC - Verifying that the solution set up for the Primary Element EP of the "conventional flowmeter" is new and does not match the existing flowmeters, and if the result is positive, go to stage 5 and if the result is negative returns to step 3-DC after modifying the constructive solution initially chosen for BR, and resolving steps 3-DC ....10-DC, checking the result, and if the result is positive proceed to stage 5, and if it is negative returns at step 7-DC, after changing the constructive solution initially chosen for BS, and the steps 7- DC ....10-DC, cycle, are proceeded again, the whole procedure is repeated until after the processing of step 10 has been reached an affirmative response, when it is possible to proceed to stage 5;
B. For non-conventional flowmeters:
Step 1-DN - Generic identification of the set of the primary elements SEP as the structural mode of achieving the primary part of the flowmeter, respectively the selection of its concrete structural configuration, among the variants of the response solutions corresponding to the sub-criterion 5.2, indicated in Table 2, which correspond to the structural schemes S2a, S2b, S4, S5, S6a, S6b shown successively in Figures 2,3,4,5,6,7;
Step 2-DN- Unitary design of each of the primary element EP component of the specific structure previously set up for the set of primary elements SEP of the unconventional flowmeter to be configured, by browsing the same steps 2-DC... 9-DC corresponding to the configuration of conventional flowmeters, and is then go to step 3-DN, for SEP achieved in structural variants S2a, S2b, S4, S5, S6b, or directly to step 4-DN, for SEP achieved in structural variant S6a;
Step 3-DN - Design of devices related to some of the structural variants of SEP, as follows: the insertion system SI for schemes S2a, S2b, S6b and the variable fluidic resistance RFV, for structural schemes S4, S5;
Step 4-DN- Achieving the constructive and informational connections between the primary elements EP, the components of the set of primary elements SEP previously set up, by following its specific structural scheme, for that set up unconventional flowmeter;
Step 5- DN- Check whether the solution configured for the set of primary elements SEP of the "unconventional flowmeter" is new and does not match the existing flowmeters, and if the result is positive go to stage 5, and if the result is negative returns to step 2-DN, and steps 3-DC ....9-DC are proceed again, then proceed to step 3-DN, if it is imposed by the prevision of step 2-DN, and then with steps 4-DN, 5-DN after modifying the constructive solution initially chosen for the block BR for the one or more EP of the SEP and check if the final outcome is positive, in which case it proceeds to stage 5, while if it is negative it returns to the step 2-DN, and proceed again steps 7-DC ...9-DC, and then with step 3-DN, if it is imposed by the prevision of step 2-DN, and then with steps 4-DN and 5-DN after modifying the constructive solution initially chosen for BS at one or more EP in the SEP, so that if the result is positive then passes to stage 5, and if not, return to step 7-DC related to step 2-DN, by repeating the same cycle until an affirmative response is obtained, following the condition in step 5-DN;
wherein the implementation of stage 5 involves the constructive synthesis of the secondary part of the flowmeter, respectively of the secondary element ES, following the general structural scheme S-ES, shown in Figure 8, by achieving the processing block BP-X_{C}, respectively the transmission block BT-Q_{R}, by the choosing of basic solutions among those related to the criteria no.13, 14 of Table 2, which are indicated in Table 6 to be correlated to the overall structural schema of the flowmeter, initially set.

2. Computer implemented method for unitary synthesis and design of flowmeters and of compound gauging structures, according to claim 1, **characterized in that** the implementation of the stage 1 involves the creation and storing of the "unitary reference logic network" needed to achieve the unitary configuration and design of new basic types of flowmeters.

3. Computer implemented method for unitary synthesis and design of flowmeters and of compound gauging structures according to claim 1, **characterized in that** the implementation of Stage 6 involves editing the detailed overall constructive structural scheme, completed for the new basic type of the configured flowmeter and naming of the new basic type of flowmeter, according to the constructive solution used for the unitary configuration and design of its primary part.

4. Computer implemented method for unitary synthesis and design of flowmeters of compound gauging structures **characterized in that**, in order to achieve any compound gauging structure, it comprises browsing the following stages:
Stage 1 - Creating and storing the unitary reference logical network, for synthesizing a new compound gauging structure;
Stage 2 - Introduction and validation of the "set of initial configuration data "of a new basic type of compound gauging structure;
Stage 3 - Establishing, for the gauging structures component of the future compound gauging structure, the analytical mode of expression of the flow rate and of the type of structure which involves, on the one hand, the establishing the analytical mode of expression of the flow rate to be measured and, on the other hand, the setting of the chosen structural type of the structural schemes of the gauging structures component of the compound gauging structure;
Stage 4 -Configuration of the new compound gauging structure CD;
Stage 5 - Validation of the novelty of the synthesized compound gauging structure;
wherein with the purpose of implementing stage 2, it proceeds to the input of the set of initial data for configuration and structural design of a new basic type of compound gauging structure, which must meet criteria no.1, 2, 3 of Table 7, validation of the input data set that is usable for the unitary configuration and design of a new basic type of compound gauging structure, and if it is not validated, modifying those input data which do not allow selection of logically consistent with each other solutions indicated in Table 7, according to the criteria no.1,2,3; wherein with the purpose of implementing stage 3, it proceeds to the next procedural steps:
Step 1. The consecutive selection among the solutions related to criteria no. 1, 2, 3.1 of Table 7, of those that fits the "initial configuration and design data" and performs the complete and consistent characterization of the analytical expression of the measured flow rate in the manner required by these " data", which must be ensured by the flowmeters which are then chosen as components of the compound gauging structure, in order to synthesize it;
Step 2 - Verify the condition if corresponding to the solution chosen for the analytical expression of the flow rate, the gauging structures of the compound gauging structure have the conventional type of the structural scheme (structure);
Step 3 For the case of a conventional type of the structural scheme, are selected the component gauging structures, among those having a "conventional structure" according to the solution corresponding to criterion no. 4 of Table 7, respectively structural scheme S1 of Figure 1, and in the case of a structural scheme of unconventional type, the component gauging structures are selected, among those having the structure according to the "variants of unconventional structural scheme" S2a, S2b, S4, S5, S6a or S6b, within the solution group code 3.1.2 of Table 7, corresponding to the solution previously selected for the analytical expression of flow rate;
wherein with the purpose of implementing stage 4, it proceeds to the following procedural steps:
Step 1 - Choosing the type of structural scheme to follow in synthesis of the compound gauging structure, among the solutions CD₁, CD₂, or CD₃, related to criterion no.4.2 of Table 7;
Step 2 - Establish the solutions related to criterion no. 4.2 of Table 7, of that type of constructive solution to be followed in achieving the CD to be the synthesized, which complies with previous options on: the structural type of the component gauging structures, conventional or unconventional, respectively the type of the way that measured fluid flows;
Step 3 - Configuration of the compound gauging structure by choosing the component gauging structures among those preliminary selected, by proceeding the previous stages and finalizing with their corresponding coupling;
Step 4 - Completion of the configuration of the compound gauging structures by solving the conditionings provided by criteria no. 15, 16, and 17 of Table 7, and using the indicated related solutions for them;
wherein in the view of implementing stage 5, it is checked if the configured compound gauging structure is found within those achieved so far and indicated in Table 8, and if this is the case the component flowmeters which are found in existing compound gauging structures, are replaced with other gauging structures, among the already preliminary selected as being appropriate, through completion of the previous steps.

5. Computer implemented method for unitary synthesis and design of flowmeters and of compound gauging structures according to claim 4, **characterized in that** with the purpose of implementing the stage 1, it proceeds at creating and storing the " Reference unitary logical network " necessary to unitary configuration and design of new basic types of compound gauging structures.

6. Computer program product for implementing the unitary method for synthesis and design of the flowmeters according to claim 1 and of the compound gauging structures according to claim 4.

## Patentansprüche

1. Computerimplementiertes Verfahren zur einheitlichen Synthese und zum Entwurf von Durchflussmessgeräten und von Verbindungmessstrukturen, **dadurch gekennzeichnet, dass** die Erzielung eines beliebigen Grundtyps von Durchflussmessgeräte.n konventionelle oder unkonventionelle, sowohl unter den existierenden, als auch unter den logisch vorstellbaren und erreichbaren, umfasst die folgenden Stufen:
Stufe 1 - Erstellen und Speichern des einheitlichen Referenzlogiknetzwerks, das zum Synthese eines neues Durchflussmessgerätetyps erforderlich ist;
Stufe 2 - Eingabe und Validierung des "Satzes der anfänglichen Einrichtungsdaten" eines neuartigen Grundtyps von Durchflussmessgerätes;
Stufe 3 - Festlegung, für den zu synthetisierenden Durchflussmessgerätes der analytischen Ausdrucksweise der gemessenen Durchflussmenge und der Baugruppe, in die das Gesamtstrukturschema des Durchflussmessgerätes eingepasst werden könnte;
Stufe 4 - Aufbau des Primärteils des Durchflussmessgerätes, bei dem der Strukturtyp des Primärteils des Durchflussmessgerätes durch ein Primärelement EP festgelegt wird (für "konventionelle Struktur" aus dem Referenzblock BR und dem empfindlichen Block BS) jeweils durch einen Satz von Primärelementen SEP (für "unkonventionelle Durchflussmessgeräte", aufgebaut durch die Verbindung zwischen mehreren EP oder durch die Verbindung zwischen einem oder zwei EP und einer Hilfsvorrichtung) und weiter für "konventionelle Durchflussmessgeräte" "mit dem einheitlichen Aufbau des Primärelements EP, dem Aufbau der Gesamtstruktur des Primärelements EP, dem einheitlichen konstruktiven Aufbau des Referenzblocks BR, dem einheitlichen konstruktiven Aufbau des sensitiven Blocks BS und der Validierung der Neuheit des synthetisierte EP - Lösung, und für "unkonventionelle Durchflussmessgerätes" das Einrichten der Strukturkaufbau von SEP, das Entwerfen der Komponentenprimärelemente EP, das Aufbau der Hilfsvorrichtungen (zur einige strukturelle Varianten), das konstruktive und informative Erreichen der Verbindungen zwischen den die SEP bildenden Hauptelementen EP, gefolgt von der Validierung der Neuheit der Lösung der synthetisierten SEP;
Stufe 5 - Aufbau des Sekundärelements ES des Durchflussmessgerätes bestehend aus dem Aufbau des Gesamtstrukturdiagramms von ES, dem einheitlichen konstruktiven Aufbau des Verarbeitungsblocks BP-XC und dem einheitlichen konstruktiven Aufbau des Übertragungsblocks BT-QR;
Stufe 6 - Erzielung der Gesamtstrucktur des neuartigen aufgebauten Durchflussmessgerätes durch Verbindung der konstruktiven Lösungen, die in den vorherigen Stufen erhalten wurden;
wobei
- die Implementierung von Stufe 2, die folgenden Verfahrensschritte umfasst:
Schritt 1 - Eingabe des "Satzes von anfänglichen Struktur- und Konstruktionsdaten" eines neuen Grundtyps eines Durchflussmessgerätes, der die Kriterien Nr. 1, 2, 3 von Tabelle 2 und die Bestimmungen von Tabelle 2A erfüllt;
Schritt 2: Validierung der "Eingabedatensatz", der zum Starten der Kofigurieren und des Entwerfen eines neuen Grundtyps von Durchflussmessgeräten verwendet werden kann, indem Sie die fehlenden Daten ausfüllen und die Eingabedaten ändern, aus denen keine logisch konsistenten Lösungen ausgewählt werden können die anderen in Tabelle 2 gezeigten Lösungen sind diesbezüglich nach den Kriterien Nr. 1, 2, 3 möglich;
- die Implementierung von Stufe 3, die folgenden Verfahrensschritte umfasst:
Schritt 1 - Fortlaufende Auswahl unter den Lösungen in Bezug auf die Kriterien Nr. 1, 2, 3 der Tabelle 2 von denen, die unter Verwendung der "ErstAufbaus- und Konstruktionsdaten" die vollständige und kohärente Charakterisierung der analytischen Ausdrucksweise der Durchflussmenge durchführen, die durch die Aufbau und die Konstruktion sichergestellt werden muss vom neuen Grundtyp von Durchflussmesgeräten;
Schritt 2 - Aufbau der Strukturgruppe, die zu dem neu zum synthetisierten Durchflussmesser passt, gemäß der oben angegebenen analytischen Ausdrucksweise der Durchflussmenge and danach, bei einem konventionellen Durchflussmessgeräten wird dann der konventionelle Entwerfen gemäß verwendet die Lösung bezog sich auf das Kriterium Nr. 4 in der Tabelle Nr. 2, jeweils die Strukturschema S1 gezeigt in Fig. 1 , und im Fall eines unkonventionellen Durchflussmessgerätes wird die "unkonventionelle Struktur" verwendet, die zu der Gruppe von Strukturen gehört, die sich auf das Kriterium Nr. 4 der Tabelle 2 beziehen, wobei eines der Strukturschema S2a, S2b, S4, S5, S6a, S6b ausgewählt wird, die in Fig. 2...7 gezeigt sind;
- die Implementierung der Stufe 4 die folgenden Schritte umfasst:
A. Für konventionelle Durchflussmessgeräte
Schritt 1-DC -Identifizieren des Primärelements EP als das strukturelle Art des Erreichens des Primärteils des Durchflussmessgerätes gemäß der Lösung in Bezug auf das Unterkriterium Nr. 5.1 von Tabelle 2, das dem Strukturdiagramm S1 von Fig. 1 entspricht;
Schritt 2-DC - Entwerfen der Gesamtaufbau des primären Elements EP, bestehend aus dem Referenzblock BR und dem sensitiven Block BS gemäß der zu Teilkriterium Nr. 5.1 der Tabelle 2 entsprechend dem Strukturdiagramm S1 der Figur 1;
Schritt 3-DC- Festlegen des tatsächlichen physikalischen Parameters, der durch den Referenzparameter XR unter den in Tabelle 1 angegebenen Varianten gemäß den zuvor festgelegten Antwortlösungen entsprechend den Kriterien Nr. 1 und 2 von Tabelle 2 erreicht werden soll;
Schritt 4 - DC - Entwerfen der Grundlösung zur Erreichung des Referenzblocks BR unter den in Tabelle 2 angegebenen Varianten, entsprechend dem Unterkriterium Nr. 6.2, durch Vermeiden der logisch inkompatiblen Sequenzen unter den in Tabelle 4 gezeigten Lösungen;
Schritt 5-DC - Konstruktiver Entwerfen des Referenzblocks BR durch sequentielles Festlegen der konstruktiven Lösungen, die den Kriterien Nr. 7 und 8 in Tabelle 2 entsprechen, und Korrelieren dieser Lösungen durch Vermeiden der logisch inkompatiblen Folgen unter den in Tabelle 5 gezeigten Lösungen;
Schritt 6-DC - Bestimmen des tatsächlichen physikalischen Parameters, der am Ausgang des Referenzblocks BR zu erreichen ist (nämlich der "variable Parameter XV"), unter den Antwortmöglichkeiten, die sich auf das Kriterium Nr. 9 der Tabelle 2 beziehen, entsprechend dem Typ von vorher eingestelltem BR muss die Lösung für XV mit der oben für XR angegebenen Lösung korreliert werden, um innerhalb der in Tabelle 1 angegebenen Korrelationsvarianten zu liegen;
Schritt 7 - DC - Beginn des Entwurfs der BS durch Auswahl der konstruktiven Lösung zum Verbinden des BR mit der BS unter den Antwortvarianten, die sich auf das Kriterium 10 in Tabelle 2 beziehen;
Schritt 8-DC- Einstellen des tatsächlichen physikalischen Parameters zum Erreichen des Ausgangsparameters von BS (oder des "charakteristischen Parameters XC"), beginnend mit der Untersuchung der in Tabelle 2A gezeigten Antwortlösungen, bezogen auf das Kriterium Nr. 11 von Tabelle 2 entsprechend den zuvor gewählten Lösungen für den konstruktiven Typ des Blocks BR und für die Variante von XV; Schritt 9 - DC - Fertigstellung der Aufbau und des Entwurfs von BS durch Auswahl der Antworten in Bezug auf die Kriterien Nr. 11 und 12 der Tabellen 2 und 2A der entsprechenden konstruktiven Aufbauslösungen;
Schritt 10 - DC - Überprüfen, ob die für das Primärelement EP des "konventionellen Durchflussmessgerätes" eingerichtete Lösung neu ist und nicht mit den vorhandenen Durchflussmessgeräten übereinstimmt und wenn das Ergebnis positiv ist, fahren Sie mit Schritt 5 fort, und wenn das Ergebnis negativ ist, kehren Sie zurück Mit Schritt 3-DC fortfahren, nachdem die ursprünglich für BR gewählte konstruktive Lösung geändert und die Schritte 3-DC ... 10-DC gelöst wurden, das Ergebnis überprüfen und mit Schritt 5 fortfahren, wenn das Ergebnis positiv ist, und wenn es negativ ist, zurückkehren In Schritt 7-DC werden nach dem Ändern der konstruktiven Lösung, die ursprünglich für BS gewählt wurde, und dem Zyklus der Schritte 7-DC ... 10-DC erneut die gesamten Vorgänge wiederholt, bis die Verarbeitung von Schritt 10 abgeschlossen ist eine positive Antwort erhalten, wenn mit Schritt 5 fortgefahren werden kann;
B. Für unkonventionelle Durchflussmessgeräten:
Schritt 1-DN - Generische Identifizierung des Satzes der Primärelemente SEP als struktureller Modus zur Erzielung des Primärteils des Durchflussmessgerätes bzw. der Auswahl seiner konkreten strukturellen Aufbau unter den Varianten der Antwortlösungen, die dem in Tabelle 2 angegebenen Unterkriterium 5.2 entsprechen und den in den 2, 3, 4, 5, 6, 7 nacheinander gezeigten Strukturschemata S2a, S2b, S4, S5, S6a, S6b entsprechen;
Schritt 2-DN - Einheitlicher Entwerfen jeder EP-Komponente des Primärelements der spezifischen Struktur, die zuvor für den Satz von Primärelementen SEP des zu konfigurierenden unkonventionellen Durchflussmessgerätes eingerichtet wurde, durch Durchsuchen derselben Schritte 2-DC ... 9-DC entspricht der Aufbau konventionellen Durchflussmessgeräten und geht dann zu Schritt 3-DN für SEP, das in den Strukturvarianten S2a, S2b, S4, S5, S6b erzielt wurde, oder direkt zu Schritt 4-DN für SEP, das in der Strukturvariante erzielt wurde S6a;
Schritt 3-DN - Entwurf von Vorrichtungen, die sich auf einige der Strukturvarianten von SEP beziehen, wie folgt: das Einfügungssystem SI für die Strukturvarianten S2a, S2b, S6b und den variablen Fluidwiderstand RFV für die Strukturvarianten S4, S5;
Schritt 4-DN - Erzielen der konstruktiven und informativen Verbindungen zwischen den Primärelementen EP, wobei die Komponenten des Satzes von Primärelementen SEP zuvor gemäß seinem spezifischen Strukturschema für diesen Satz einen unkonventionellen Durchflussmesser eingerichtet haben;
Schritt 5- DN- Überprüfen, ob die für den Satz der Primärelemente SEP des "unkonventionellen Durchflussmessgerätes" konfigurierte Lösung neu ist und nicht mit den vorhandenen Durchflussmessgeräten übereinstimmt. Wenn das Ergebnis positiv ist, man fahrt mit Schritt 5 fort und wenn das Ergebnis negativ ist kehrt zu Schritt 2-DN zurück, und die Schritte 3-DC ... 9-DC werden erneut ausgeführt. Fahren Sie dann mit Schritt 3-DN fort, falls dies durch die Ausführung von Schritt 2-DN vorgeschrieben ist, und fahren Sie dann mit den Schritten 4 bis 4 fort. DN, 5-DN nach dem Modifizieren der konstruktiven Lösung, die ursprünglich für den Block BR für das eine oder die mehreren EP des SEP gewählt wurde, und Überprüfen, ob das Endergebnis positiv ist, in welchem Fall es zu Stufe 5 übergeht, während es, wenn es negativ ist, zurückkehrt Fahren Sie mit Schritt 2-DN fort, und fahren Sie mit Schritt 7-DC ... 9-DC fort. Fahren Sie dann mit Schritt 3-DN fort, falls dies durch die Ausführung von Schritt 2-DN erforderlich ist, und fahren Sie dann mit Schritt 4-DN und fort 5-DN nach dem Ändern der konstruktiven Lösung, die ursprünglich für BS bei einem oder mehreren EP in der SEP gewählt wurde, so dass, wenn das Ergebnis positiv ist, zu Stufe 5 übergegangen wird, und, falls nicht, zu Schritt 7-DC zurückgekehrt wird zu Schritt 2-DN, indem der gleiche Zyklus wiederholt wird, bis eine positive Antwort erhalten wird, die der Bedingung in Schritt 5-DN folgt;
- die Implementierung der Stufe 5 die konstruktive Synthese des Sekundärteils des Durchflussmessgerätes bzw. des Sekundärelements ES im Anschluss an das Allgemeine umfasst Strukturschema S-ES, gezeigt in Fig. 8, durch Erreichen des Verarbeitungsblocks BP-XC bzw. des Übertragungsblocks BT-QR durch Auswahl von Grundlösungen unter denjenigen, die sich auf die Kriterien Nr. 13, 14 von Tabelle 2 beziehen, welche sind in Tabelle 6 angegeben und müssen mit dem anfänglich eingestellten Gesamtstrukturschema des Durchflussmessers korreliert werden.

2. Computerimplementiertes Verfahren zur einheitlichen Synthese und zum Entwurf von Durchflussmessgeräten und von Verbindungmessstrukturen nach Anspruch 1, **dadurch gekennzeichnet, dass** die Implementierung der Stufe 1 die Erstellung und Speicherung des "einheitlichen Referenzlogiknetzwerks" umfasst, das zur Erzielung der einheitlichen Aufbau und zur Entwicklung neuer Grundtypen von Durchflussmessgeräten benötigt wird .

3. Computerimplementiertes Verfahren zur einheitlichen Synthese und zum Entwurf von Durchflussmessgeräten und von Verbindungmessstrukturen nach Anspruch 1, **dadurch gekennzeichnet, dass** die Implementierung von Stufe 6 die Bearbeitung des detaillierten konstruktiven Gesamtstrukturschemas umfasst, das für den neuen Grundtyp des konfigurierten Durchflussmess gerätes fertiggestellt und benannt wird der neue Grundtyp des Durchflussmessgerätes, entsprechend der konstruktiven Lösung, die für die einheitliche Aufbau und Entwurf seines Primärteils verwendet wird.

4. Computerimplementiertes Verfahren zur einheitlichen Synthese und zum Entwurf von Durchflussmessgeräten und von Verbindungmessstrukturen, **dadurch gekennzeichnet, dass** die Erreichung einer beliebigen Verbindungmessstruktur umfasst die folgenden Stufen:
Stufe 1 - Erstellen und Speichern des einheitlichen logischen Referenznetzwerks zum Synthese einer neuen Verbindungmessstruktur;
Stufe 2 - Einführung und Validierung des "Satzes von ErstAufbausdaten" eines neuen Grundtyps einer Verbindungmessstruktur;
Stufe 3 - Festlegen, für die Messstrukturkomponente des zukünftiges Verbindungmessstruktur des analytischen Ausdrucksmodus der Durchflussmenge und des beteiligtes Strukturtyps , wobei zum einen Seite der analytische Ausdrucksmodus der messenden Durchflussmenge festgelegt wird und andererseits die Einstellung des gewählten Strukturtyps der Strukturschemata der Messstrukturkomponente der zusammengesetzten Verbindungmessstrukturenen ;
Stufe 4 -Entwerfen vom neuen Verbindungmessstruktur CD;
Stufe 5 - Validierung der Neuheit der synthetisierten Struktur des Verbindungmessstruktur;
wobei
- zum Zweck der Implementierung der Stufe 2, die Eingabe des Satzes von Anfangsdaten für die Aufbau und die strukturelle Konstruktion eines neuen Grundtyp des Verbindungmessstruktur, der die Kriterien Nr. 1, 2, 3 von Tabelle 7 erfüllen muss, durchgeführt wird, Validierung des Eingabedatensatzes, der für die einheitliche Aufbau und den Entwurf eines neuen Grundtyps des Verbindungmessstruktur verwendet werden kann, und falls vorhanden wird nicht validiert, indem die Eingabedaten geändert werden, die keine Auswahl logisch miteinander übereinstimmender Lösungen von Tabelle 7 gemäß den Kriterien 1, 2, 3 ermöglichen;
- zum Zweck der Implementierung der Stufe 3, die nächsten Verfahrensschritten fortgefahren wird:
Schritt 1 -Die aufeinanderfolgende Auswahl unter den Lösungen nach den Kriterien Nr. 1, 2, 3.1 derjenigen, die zu den "ErstAufbaus- und Auslegungsdaten" passen und die vollständige und konsistente Charakterisierung des analytischen Ausdrucks der gemessenen Durchflussmenge in der von diesen "Daten" geforderten Weise durchführen, die von den Durchflussmessern gewährleistet werden müssen, die werden dann als Komponenten des zusammengesetztes Verbindungmessstruktur ausgewählt, um sie zu synthetisieren;
Schritt 2 - Überprüfen die Bedingung, falls sie der für die analytische Darstellung der Durchflussmenge gewählten Lösung entspricht, die Messstrukturen des zusammengesetztes verbindungmessstruktur haben den konventionellen Typ des Strukturschemas (Struktur);
Schritt 3 -Für den Fall eines konventionellen Typs des Strukturschemas werden das Verbindungmessstruktur unter jenen mit einer "konventionellen Struktur" gemäß der Lösung ausgewählt, die dem Kriterium Nr. 4 von Tabelle 7, bzw. Strukturschema S1 von 1, und im Fall eines Strukturschemas von unkonventionellem Typ werden das Verbindungmessstruktur unter jenen mit der Struktur gemäß den "Varianten des unkonventionellen Strukturschemas" S2a, S2b ausgewählt, S4, S5, S6a oder S6b innerhalb des Lösungsgruppencodes 3.1.2 von Tabelle 7 entsprechend der zuvor für den analytischen Ausdruck der Durchflussrate ausgewählten Lösung;
- zum Zweck der Implementierung der Stufe 4, die folgenden Verfahrensschritten fortgefahren wird:
Schritt 1 - Auswahl der Art des Strukturschemas bis folgen in der Synthese der zusammengesetzten Verbindungmessstrukturen unter den Lösungen CD1, CD2 oder CD3, bezogen auf das Kriterium Nr. 4.2 von Tabelle 7;
Schritt 2 - Bestimmung die Lösungen für das Kriterium Nr. 4.2 von Tabelle 7, der Art der konstruktiven Lösung, die bei der Erzielung der zu synthetisierenden CD zu befolgen ist, die mit den vorherigen Optionen übereinstimmt: die strukturelle Art der Verbindungmessstrukturen, konventionell oder unkonventionell, bzw. die Art der messende Flüssigkeit fließt;
Schritt 3 - Aufbau des zusammengesetztes Verbindungmessstruktur durch Auswahl des komponentes Verbindungmessstruktur unter den vorab ausgewählten, indem die vorherigen Schritte ausgeführt und mit der entsprechenden Kopplung abgeschlossen werden;
Schritt 4 - Fertigstellung der Aufbau der zusammengesetzten Verbindungmessstrukturen durch Lösen der Konditionierungen, die durch die Kriterien Nr. 15, 16 und 17 von Tabelle 7 und unter Verwendung der angegebenen verwandten Lösungen für sie;
wobei
- zum Zweck der Implementierung der Stufe 5, wird ob das synthetisiertes Verbindungmessstruktur innerhalb der bisher erreichten und in angegebenen liegt Tabelle 8 geprüft, und wenn dies der Fall ist, werden die Komponentendurchflussmesser, die in vorhandenen zusammengesetzten Verbindungmessstrukturen zu finden sind, durch andere Verbindungmessstrukturen ersetzt, die unter den bereits vorab als angemessen ausgewählten ausgewählt wurden, bis die vorherigen Schritte abgeschlossen sind.

5. Computerimplementiertes Verfahren zur einheitlichen Synthese und zum Entwurf von Durchflussmessgeräten und von Verbindungmessstrukturen nach Anspruch 4, **dadurch gekennzeichnet, dass** zum Zweck der Implementierung der Stufe 1, wird mit dem Erstellen und Speichern des Referenz-Einheits-Logiknetzwerks notwendigen zur einheitlichen Synthese und zum Entwurf neuer Grundtypen von Durchflussmesserkombinationen " fortgefahren.

6. Computerprogrammprodukt zur Durchführung des Verfahrens zur einheitlichen Synthese und zum Entwurf von Durchflussmessgeräten nach Anspruch 1 und von Verbindungmessstrukturen nach Anspruch 4.

## Revendications

1. Procédé informatique de synthèse unitaire et de conception des débitmètres et de structures de jaugeange de composès, **caractérisé en ce que**, pour réaliser tout type de débitmètre de base, conventionnel ou non conventionnel, à la fois parmi ceux existants et parmi ceux logiques imaginables et réalisables, il comprend le parcours des étapes suivantes:
Étape 1 - Créer et mémoriser le réseau logique de référence unitaire nécessaire à la configuration d'un nouveau type de débitmètre;
Étape 2 - Saisie et validation de "l'ensemble de données de configuration initiale" d'un nouveau type de base de débitmètre;
Etape 3 - Etablissement, pour le débitmètre à synthétiser, du mode d'expression analytique du débit de mesure et du groupe de structure dans lequel pourrait être intégré le schéma de structure général du débitmètre;
Etape 4 - Configuration de la partie primaire du débitmètre, qui implique la définition du type de structure de la partie primaire du débitmètre, fournie par un élément primaire EP (pour "structure classique" constituée du bloc de référence BR et du bloc sensible BS), respectivement, par un ensemble d'éléments primaires SEP (pour "débitmètres non conventionnels", constitués par la connexion entre plusieurs EP ou par la connexion entre un ou deux EP et un dispositif auxiliaire), puis par "débitmètres conventionnels" "avec la conception unitaire de l'élément primaire EP, la mise en place de la structure générale de l'élément primaire EP, la conception constructive unitaire du bloc de référence BR, la conception constructive unitaire du bloc sensible BS et la validation de la nouveauté du solution EP synthétisée, et pour les "débitmètres non conventionnels", la mise en place de la configuration structurelle de SEP, la conception des éléments primaires composants EP, la conception des dispositifs auxiliaires certaines variantes structurelles), la réalisation constructive et informationnelle des connexions entre les éléments primaires EP composant le SEP, suivie de la validation de la nouveauté de la solution du SEP synthétisé;
Étape 5 - Configuration de l'élément secondaire ES du débitmètre, qui consiste à définir le schéma structurel général de ES, la conception constructive unitaire du bloc de traitement BP-XC et, respectivement, la conception constructive unitaire du bloc de transmission BT-QR;
Étape 6 - Réalisation de l'assemblage structurel du nouveau type de débitmètre configuré en connectant les solutions constructives obtenues aux étapes précédents;
où
- la mise en œuvre de l'étape 2 implique les pas de procédure suivante:
Pas 1 - Entrée de " l'ensemble de données de configuration initiale de la structure et de conception" d'un nouveau type de base de débitmètre qui répond aux critères 1, 2, 3 du tableau 2 et aux dispositions du tableau 2A;
Pas 2: Validez "l'ensemble de données d'entrée" pouvant être utilisé pour démarrer la synthèse et la conception d'un nouveau type de débitmètre de base en complétant les données manquantes et en modifiant les données d'entrée ne permettant pas la sélection de solutions logiquement cohérentes les autres solutions présentées dans le Tableau 2, comme étant possibles à cet égard, selon les critères no. 1, 2, 3;
- la mise en œuvre de la phase 3 implique les pas de procédure suivante:
Pas 1 - Sélection consécutive parmi les solutions liées au critère no. 1, 2, 3 du Tableau 2 de ceux qui, à l'aide des "données de configuration et de conception initiales", procèdent à la caractérisation complète et cohérente du mode d'expression analytique du débit de mesure, qui doit être assurée par la synthèse et la conception du nouveau type de base de débitmètre;
Pas 2- Configuration du groupe de structures qui correspond au nouveau débitmètre être synthétisé, en fonction du mode d'expression analytique du débit défini ci-dessus, puis dans le cas d'un débitmètre classique, on utilise la structure conventionnelle selon la solution concernait le critère no. 4 du Tableau no. 2, respectivement le schéma structurel S1 représenté sur la figure 1, et dans le cas d'un débitmètre non conventionnel, on utilise la "structure non conventionnelle" appartenant au groupe de structures lié au critère no. 4 du Tableau 2, en choisissant l'un des schémas structurels S2a, S2b, S4, S5, S6a, S6b illustrés sur les figures 2 ... 7;
- la mise en œuvre de l'étape 4 implique les pas de la procédure suivante:
A. Pour les débitmètres conventionnels
Pas 1-DC Identification de l'élément primaire EP en tant que mode structurel de réalisation de la partie primaire du débitmètre, selon la solution liée au sous-critère no. 5.1 du Tableau 2, qui correspond au schéma structurel S1 de la figure 1;
Pas 2-DC Etablissement de la configuration globale de l'élément primaire EP, constitué du bloc de référence BR et du bloc sensible BS selon la solution liée au sous-critère no. 5.1 du Tableau 2 correspondant au schéma structurel S1 de la figure 1;
Pas 3-DC - Détermination du paramètre physique réel à atteindre par le paramètre de référence XR parmi les variantes indiquées dans le Tableau 1 conformément aux solutions de réponse précédemment établies correspondant aux critères no. 1 et 2 du tableau 2;
Pas 4 - DC - Détermination de la solution de base pour réaliser le bloc de référence BR parmi les variantes indiquées dans le Tableau 2, correspondant au sous-critère no. 2, en évitant les séquences logiquement incompatibles parmi les solutions présentées dans le tableau 4;
Pas 5-DC - Conception constructive du bloc de référence BR en établissant séquentiellement les solutions constructives correspondant aux critères no. 7 et 8 du Tableau 2 et en les corrélant en évitant les séquences logiquement incompatibles entre les solutions présentées dans le Tableau 5;
Pas 6-DC - Détermination du paramètre physique à atteindre à la sortie du bloc de référence BR (à savoir le "paramètre variable XV") parmi les possibilités de réponse relatives au critère no. 9 du Tableau 2, correspondant au type de BR précédemment défini, la solution pour XV doit être corrélée avec la solution indiquée ci-dessus pour XR, de manière à correspondre aux variantes de corrélation indiquées dans le Tableau 1;
Pas 7 - DC - Démarrage de la conception de BS en choisissant la solution constructive pour connecter le BR à BS, parmi les variantes de réponse relatives au critère 10 du Tableau 2;
Pas 8-DC - Définition du paramètre physique réel pour obtenir le paramètre de sortie à partir de BS (ou "paramètre caractéristique XC"), en commençant par la recherche des solutions de réponse présentées dans le Tableau 2A, en rapport avec le critère no. 11 du Tableau 2, correspondant aux solutions précédemment choisies pour le type de construction du bloc BR et pour la variante de XV;
Pas 9 - DC - Finalisation de la configuration et de la conception de la BS en choisissant parmi les réponses relatives aux critères no. 11 et 12 des Tableaux 2 et 2A des solutions de configuration constructive correspondantes;
Pas 10 - DC - Vérification que la solution configurée pour l'élément primaire EP du "débitmètre conventionnel" est nouvelle et ne correspond pas aux débitmètres existants et si le résultat est positif, passer à l'étape 5 et si le résultat obtenu est négatif, passer à l'étape 3-DC après avoir modifié la solution constructive initialement choisie pour BR et avoir résolu les Pas 3-DC .... 10-DC, vérifier le résultat et si le résultat est positif, passer aux Pas 5 et si elle est négative, renvoie au Pas 7-DC, après avoir changé la solution constructive initialement choisie pour BS et les Pas 7-DC ... 10-DC, cycle, on recommence, la procédure entière est répétée jusqu'à ce que le traitement de Pas 10 ait été terminé. obtenu une réponse affirmative lorsqu'il est possible de passer au Pas 5;
B. Pour les débitmètres non conventionnels:
Pas 1-DN - Identification générique de l'ensemble des éléments primaires SEP en tant que mode de réalisation de la partie primaire du débitmètre, respectivement le choix de sa configuration structurelle en béton, parmi les variantes de la Les solutions de réponse correspondant au sous-critère 5.2, indiquées dans le Tableau 2, correspondent aux schémas structurels S2a, S2b, S4, S5, S6a, S6b montrés successivement aux figures 2,3,4,5,6,7;
Pas 2-DN - Conception unitaire de chacun des composants EP élément primaire de la structure spécifique précédemment définie pour l'ensemble d'éléments primaires SEP du débitmètre non conventionnel à configurer, en parcourant les mêmes étapes 2-DC ... 9-DC correspondant à la configuration des débitmètres conventionnels, puis passe au Pas 3-DN pour SEP obtenu dans les variantes de structure S2a, S2b, S4b, S5, S6b ou directement au Pas 4-DN pour SEP obtenue dans la variante de structure S6a;
Pas 3-DN - Conception des dispositifs liés à certaines des variantes structurelles de SEP, comme suit: le système d'insertion SI pour les schémas S2a, S2b, S6b et la résistance fluidique variable RFV, pour les schémas structurels S4, S5;
Pas 4-DN-Réalisation des connexions constructives et informationnelles entre les éléments primaires EP, les composants de l'ensemble d'éléments primaires SEP précédemment configurés, en suivant son schéma structurel spécifique, pour ce débitmètre non conventionnel ;
Pas 5- DN- Vérifier si la solution configurée pour l'ensemble des éléments principaux SEP du "débitmètre non conventionnel" est nouvelle et ne correspond pas aux débitmètres existants et si le résultat est positif, passer au Pas 5 et si le résultat est négatif, on revient au Pas 2-DN, et les Pas 3-DC .... 9-DC sont à nouveau exécutées, puis passez au Pas 3-DN, si cela est imposé par la prévision de Pas 2-DN, puis aux Pas 4-DN, 5-DN après modification de la solution constructive initialement choisie pour le bloc BR pour un ou plusieurs des EP du SEP et vérifier si le résultat final est positif, auquel cas il passe à l'étape 5, puis s'il est négatif, il retourne au Pas 2-DN et passez à nouveau aux Pas 7-DC ... 9-DC, puis au Pas 3-DN, si elle est imposée par la prévision du Pas 2-DN, puis aux Pas 4-DN et 5-DN après modification de la solution constructive initialement choisie pour BS dans un ou plusieurs EP du SEP, de sorte que, si le résultat est positif, passez à l'étape 5 et sinon, retourne au Pas 7-DC de l'étape 2-DN, en répétant le même cycle jusqu'à l'obtention d'une réponse affirmative, en suivant la condition du Pas 5-DN:
- la mise en œuvre de l'étape 5 implique la synthèse constructive de la partie secondaire du débitmètre, respectivement de l'élément secondaire ES, suivant le schéma structurel général S-ES, représenté à la figure 8, en réalisant le bloc de traitement BP-XC, respectivement le bloc de transmission BT-QR, en choisissant des solutions de base parmi celles liées aux critères no. 13, 14 du Tableau 2, qui sont indiqués dans le Tableau 6 pour être corrélés au schéma structurel global du débitmètre, initialement défini.

2. Procédé informatique de synthèse unitaire et de conception des débitmètres et de structures de jaugeange de composés., selon la revendication 1, **caractérisé en ce que** la mise en œuvre de l'étape 1 implique la création et le stockage du "réseau logique de référence unitaire" nécessaire pour réaliser la synthèse unitaire et la conception de nouveaux types de débitmètres de base.

3. Procédé informatique de synthèse unitaire et de conception des débitmètres et de structures de jaugeange de composés, selon la revendication 1, **caractérisé en ce que** la mise en œuvre de l'étape 6 implique l'édition du schéma structurel de construction global détaillé, achevé pour le nouveau type de base du débitmètre configuré et la désignation de le nouveau type de base de débitmètre, en fonction de la solution constructive utilisée pour la synthèse unitaire et la conception de sa partie primaire.

4. Procédé informatique de synthèse unitaire et de conception des débitmètres et de structures de jaugeange de composés, **caractérisée en ce que**, pour réaliser toute structure de jaugeange de composés, il comprend le parcours des étapes suivantes:
Étape 1 - Création et stockage du réseau logique de référence unitaire, pour la synthèse d'une nouvelle jaugeange de composés;
Étape 2 - Introduction et validation de "l'ensemble des données de configuration initiales" d'un nouveau type de base de jaugeange de composés;
Etape 3 - Détermination du mode d'expression analytique du débit et du type de structure impliquant la jaugeange de composés de la future structure de jaugeange de composés qui implique, d'une part, l'établissement du mode analytique d'expression du débit à mesurer et, d'autre part, la définition du type de structure choisi parmi les schémas de la structure de jaugeange de composés;
Étape 4 - Synthèse de la nouvelle structure de de jaugeange de composés CD;
Étape 5 - Validation de la nouveauté de la structure de jaugeange de composés;
où
- pour la mise en œuvre de l'étape 2, on procède à la saisie de l'ensemble de données initiales pour la synthèse et la conception structurelle d'un nouveau type de base de la structure de jaugeange de composés , qui doit répondre aux critères no. 1, 2, 3 du Tableau 7, validation de l'ensemble de données d'entrée utilisable pour la synthèse unitaire et la conception d'un nouveau type de base de structure de jaugeange de composés, et s'ill n'est pas validé, en modifiant les données d'entrée qui ne permettent pas la sélection de solutions logiquement cohérentes les unes par rapport aux autres indiquées dans le Tableau 7, en fonction du critère no. 1.2, 3;
- pour la mise en œuvre l'étape 3, on procède aux pas suivants de la procédure:
Pas 1- La sélection consécutive parmi les solutions liées au critère no. 1, 2, 3.1 du Tableau 7, de ceux qui correspondent aux "données de synthèse initiale et de conception" et effectuent la caractérisation complète et cohérente de l'expression analytique du débit mesuré de la manière requise par ces "données", qui doit être assurée par les débitmètres qui sont ensuite choisis en tant que composants de la, afin de la synthétiser;
Pas 2 - Vérifier la condition si, en correspondent à la solution choisie pour l'expression analytique du débit, les structures de jaugeange de composés présentent le type classique du schéma structurel (structure);
Pas 3 - Dans le cas d'un schéma conventionnel de type structurel, on choisit les structures de jaugeange de composés , parmi celles ayant une "structure conventionnelle" selon la solution correspondant au critère no. 4 du Tableau 7, respectivement schéma de structure S1 de la figure 1, et dans le cas d'un schéma de structure de type non conventionnel, les structures de jaugeange de composés sont sélectionnées parmi celles ayant la structure selon les "variantes du schéma de structure non conventionnel" S2a, S2b , S4, S5, S6a ou S6b, dans le groupe de solutions, code 3.1.2 du Tableau 7, correspondant à la solution précédemment sélectionnée pour l'expression analytique du débit;
- pour la mise en œuvre la phase 4, on procède aux pas de procédure suivante:
Pas 1 - Choix du type de structure pour suivent en synthèse de la structure de jaugeange de composés, parmi les solutions CD1, CD2 ou CD3, correspondant au critère no. 4.2 du Tableau 7;
Pas 2 - Établir les solutions liées au critère no. 4.2 du Tableau 7, de ce type de solution constructive à suivre pour obtenir le CD à synthétiser, ce qui est conforme aux options précédentes sur: le type de structure de jaugeange de composès, conventionnel ou non conventionnel, respectivement le type de la façon dont on a mesuré les écoulements de fluide;
Pas 3 - Synthèse de la structure de jaugeange de composès en choisissant les structures de jaugeange de composès parmi celles sélectionnées au préalable, en passant aux étapes précédentes et en finalisant avec leur couplage correspondant;
Pas 4 - Achever la synthèse des structures de jaugeange de composés en résolvant les conditionnements fournis par le critère no. 15, 16 et 17 du Tableau 7, en utilisant les solutions associées indiquées pour celles-ci;
où
- pour la mise en œuvre de l'étape 5, il est vérifié si la structure de jaugeange de composés synthétisée est trouvée dans celles réalisées jusqu'à présent et indiquée dans le Tableau 8 et, le cas échéant, les jaugeanges de composés trouvés dans les structures de jaugeange de composés existantes sont remplacés par d'autres jaugeanges de composés , parmi celles sélectionnées au préalable, comme appropriées, en complétant les étapes précédentes.

5. Procédé informatique de synthèse unitaire et de conception des débitmètres selon la revendication 1 et des structures de jaugeange de composés selon la revendication 4 **caractérisée en ce que**, pour la mise en œuvre de l'étape 1, on procède à la création et au stockage du "réseau logique unitaire de référence" nécessaire à la synthèse unitaire et à la conception de nouveaux types de base de structures de jaugeange de composés .

6. Programme informatique pour la mise en œuvre du procédé de synthèse unitaire et de conception des débitmètres selon la revendication 1 et des structures de jaugeange de composés selon la revendication 4.
